# EUROPEAN PATENT APPLICATION

(11) **EP 4 813 544 A1**
(43) Date of publication of application: **30.09.2026**
(21) Application number: 25166176.5
(22) Date of filing: 25.03.2025
(51) Int. Cl.: B21J 15/32, B23P 19/00

(54) **COUPLING DEVICE FOR A JOINING SYSTEM WITH AN AUTOMATIC SAFETY LOCK MECHANISM**

(71) Applicant: Newfrey LLC, New Britain, CT 06053 (US)
(72) Inventor: HAIN, Jochen, 35394 Gießen (DE); LIPPERT, Stefan, 35394 Gießen (DE); KOHLSTÄDT, Timo, 35394 Gießen (DE)
(74) Representative: Haarpatent Patentanwälte Krämer Meyer

(57) **Abstract**

A coupling device (6) for connection to a feeding unit (3) designed to transport fasteners (1) from a first element (2) to a second element (4) is described. The device (6) comprises a coupling body (8) with a feed channel (11) that passes through the coupling body (8) in its longitudinal direction and extends between a first end (9) and a second end (10) of the coupling body (8). The device (6) further comprises a locking element (17) that is mounted in the coupling device (6) with a bearing element (18) so as to be rotatable about a pivot axis, wherein said locking element (17) is movable between a locking position and an open position. It also comprises an elastic element (21) that biases the locking element (17) into the locking position. The locking element (17) comprises a first and a second lever arm (19, 20), wherein the first lever arm (19) comprises an abutment surface (24) at its free end. The elastic element (21) is in operative contact with the first lever arm (19) of the locking element (17), so that the abutment surface (24) of the first lever arm (19) projects into the feed channel (11).

## Description

The invention relates to a coupling device for a joining system having an automatic safety lock mechanism and designed to transport fasteners from a first element to a second element. The invention also relates to a feeding unit with a coupling device, a supply tube and a receiving element.

In industrial applications, fasteners are often fed using feeding units that transport the elements from a storage container, such as a magazine or a funnel, to a processing device via pressurized supply tubes. The term "fasteners" includes, in particular, rivets, blind rivets, screws, welding studs and other types of fasteners. For example, stud feeders for stud welding machines, rivet feeders for riveting machines or setting machines are known as processing devices or processing machines.

The supply tubes are susceptible to damage, especially due to the mechanical stress caused by the movements of an industrial robot or similar devices. Damage to or unintentional separation of a supply tube can cause the fasteners to escape in an uncontrolled manner and potentially harm people or machines, especially when the processing machine is not in operation.

To counteract this problem, various solutions have been developed that are based on mechanical, pneumatic or sensor-based safety mechanisms. However, known solutions are often complex to implement, require the use of additional components or lead to increased maintenance costs.

DE 195 32 937 C1 describes a device for feeding small parts with a supply tube and a measuring device that monitors the proper condition and the correct connection of the supply tube. This ensures that the supply tube is connected correctly, but the risk of uncontrolled leakage of joining elements remains.

EP 1 268 112 B1 discloses a stud-dispensing device that transports a succession of studs through a channel to a fastening unit by means of compressed air. The device comprises a bearing element with a mounting opening that can be closed by a feed sleeve. This reduces the risk of fasteners leaking out, but is complex to implement mechanically.

A feeding unit for joining elements is known from EP 3 833 901 A1, which comprises a connection coupling with a connecting plug and a connecting socket. By inserting the connecting plug into the socket, they can be reversibly coupled. This solution allows a flexible connection, but does not address safety mechanisms in the decoupled state.

Although these solutions address various aspects of feeding and securing fasteners, there is still a need for simplified yet effective safety mechanisms. In particular, a compact and easy-to-implement solution is desired that reduces the risk of uncontrolled escape of joining elements while allowing for easy maintenance and retrofitting of existing systems.

The object of the invention is to provide a device that prevents the unintentional ejection of fasteners from a supply tube when a processing machine is not in use.

The above-mentioned object is achieved by the invention defined in independent claim 1. Preferred embodiments are described in the dependent claims.

The problem is solved by providing a coupling device for connection to a supply unit designed to transport fasteners from a first element to a second element, comprising:
- a coupling body with a feed channel that extends through the coupling body in its longitudinal direction and extends between a first end and a second end of the coupling body,
- a locking element that is mounted in the coupling device with a bearing element so as to be rotatable about a pivot axis and movable between a locking position and an open position,
- an elastic element that biases the locking element into the locking position, wherein,
the locking element comprises a first and a second lever arm which each extend from the pivot axis to free ends of the locking element, wherein the first lever arm comprises an abutment surface at its free end and wherein the elastic element is in operative contact with the first lever arm of the locking element, so that the abutment surface of the first lever arm projects into the feed channel.

The coupling device is designed for connection to a supply unit, notably a feeding hose, that allows the transport of fasteners between the supply unit and a processing head for instance or more generally between a first and a second element. It includes a coupling body having a longitudinal feed channel extending from the first end to the second end of the coupling body. This feed channel is used to feed fasteners through the coupling unit to the second element.

A central element of the device is a locking element that is mounted on a bearing element in the coupling device so that it can rotate around a pivot axis. The locking element is designed so that it can move between a locking position and an open position. In the locking position, the locking element extends into the feed channel at an angle to the longitudinal direction of the feed channel, thereby preventing the uncontrolled passage of fasteners. In the open position, the locking element is retracted from the feed channel, allowing the fasteners to be transported without obstruction.

In one embodiment, the locking element is asymmetrical and comprises two lever arms that extend from the pivot axis to their respective free ends. In this variant, the bearing element projects through the locking element eccentrically, so that the first lever arm of the locking element is longer than the second lever arm. This ensures that the leverage is optimally distributed. The bearing element of the coupling body is preferably designed so that it engages with the locking element off-center, thus allowing an asymmetrical rotational movement. In another embodiment, the bearing element projects through the locking element in such a way, that the first and second lever have the same length.

An elastic element, such as a compression spring, is in direct contact with the first lever arm of the locking element. This elastic element ensures that the locking element is automatically pretensioned into the locking position when no external forces are acting on the locking element. It is preferred that the second lever arm extends at least partially out of the coupling body to allow for easy manual or mechanical operation.

The locking element, or more precisely the abutment surface of its first lever arm, which extends into the feed channel, prevents fasteners from being discharged in an uncontrolled manner. In a preferred embodiment, the different lengths of the lever arms ensure an optimized transfer of force, whereby the locking element is returned to the locked position firmly and reliably. In addition, the different lengths of the lever arms in the preferred embodiment ensure that the first lever arm extends further into the cross-section of the feed channel than is known from the prior art, thus ensuring that the fasteners are blocked. It has been shown that when a fastener impacts the abutment surface of the first lever arm of the locking element, a moment is generated and the feed channel is firmly closed, as the fastener essentially hits the abutment surface axially in the direction of the longitudinal axis.

In one embodiment, the coupling device includes an elastic element, which is designed as a compression spring. The compression spring can be made of metal, for example. The compression spring is arranged between the first lever arm of the locking element and a fixed support on the coupling device. This arrangement positions the compression spring so that it exerts a constant restoring force on the first lever arm of the locking element, especially when the locking element is in the open position. This ensures that the locking element is reliably biased into the locking position when no external force is acting on it. The fixed support serves as a firmly anchored point that ensures that the spring force is precisely and efficiently transmitted to the lever arm. In addition, this solution is characterized by a simple and compact design that can be implemented cost-effectively.

The coupling device is advantageously designed such that the feed channel of the coupling body comprises a uniform cross-sectional geometry, which is partially blocked by the locking element in the locking position. The feed channel advantageously ensures the smooth transport of the fasteners. In the locking position, the locking element partially extends into the feed channel and blocks it without completely changing the uniform cross-sectional geometry of the channel. This embodiment allows the feed channel to be used without restriction for the passage of fasteners in the open position, while in the locking position, the fasteners are effectively prevented from passing through.

Another embodiment provides that the feed channel of the coupling body comprises a cross-sectional constriction into which the locking element projects with the first lever arm. The cross-sectional constriction can be specially designed to interact with the first lever arm of the locking element. In the locking position, the first lever arm of the locking element extends into this cross-sectional constriction, thereby blocking the majority of the feed channel, in particular, the same or more than the radius of the feed channel, to prevent the uncontrolled escape of fasteners. This arrangement ensures that the locking element engages precisely in the feed channel and reliably fulfills the function of the lock.

The coupling device is preferably configured such that the second lever arm of the locking element comprises a bevel at its free end. This bevel can be used to facilitate interaction with an associated component, such as a receiving element that can be connected to the coupling device. When connecting the receiving element to the coupling body, the bevel allows the locking element to be moved gently and in a controlled manner from the locking position to the open position. This prevents mechanical overloading of the locking element and increases the service life of the coupling device. In addition, the bevel ensures low-friction guidance and holds the device in an efficient and trouble-free operating condition.

It is preferred that the coupling device includes a restricting element that forms a stop for the second lever arm of the locking element in the locking position of the locking element, thus defining a maximum pivot angle of the locking element. This advantageous design ensures that the locking element is held precisely in the locking position and that overuse or incorrect positioning of the locking element is prevented.

In one embodiment, the coupling device comprises a removable cover. The cover can be detachably attached to the coupling body by means of screws, snap-fits or latches and ensures easy access to the feed channel of the coupling device. In an alternative embodiment, the cover is not removable and is press-fitted to the coupling body.

In a further embodiment of the coupling device, this cover comprises a recess pointing in the direction of the feed channel, which is used to receive the elastic element. The recess is designed in particular so that the elastic element, for example a compression spring, is securely mounted in the cover and is precisely in contact with the first lever arm of the locking element. The removable cover allows for easy assembly and maintenance of the elastic element without having to disassemble the entire coupling body. The removable cover can be connected to the coupling body, for example, by screw connections, latching or snap-on connections.

A section of the cover can be used as a restricting element for the locking element in one embodiment of the coupling device. This section of the cover is positioned and shaped so that it serves as a stop for the second lever arm when the locking element is in the locking position, thereby defining the maximum pivot angle of the locking element. By integrating the restricting element into the cover, the design of the coupling device is simplified, since additional structural components are avoided. At the same time, this embodiment ensures precise guidance and that the locking element is firmly restricted.

Another embodiment of the coupling device is provided in which the pivot axis of the locking element is defined by a pin that is securely mounted in the coupling body. In this embodiment, the pin serves as a pivot point for the locking element and allows it to move between the locking position and the open position. The pin's mounting in the coupling body ensures that the locking element is firmly and precisely guided.

Another advantageous embodiment provides that the pivot axis of the locking element is defined by a pin that is mounted in the cover. This embodiment ensures easy disassembly and maintenance of the locking element, since both the pin and the locking element can be accessed and replaced without additional effort. At the same time, the stability and precise guidance of the locking element during operation is maintained.

In one embodiment of the invention, it is further provided that the abutment surface of the first lever arm of the locking element extends transversely to the longitudinal axis of the locking element. The abutment surface projects preferably completely into the feed channel in the locking position. This abutment surface is designed to provide a defined contact surface when a fastener enters the feed channel. The embodiment of the abutment surface, which extends transversely to the longitudinal axis, forms a large contact surface so that fasteners cannot move past it.

The abutment surface can advantageously be provided with a friction-reducing coating. The purpose of the coating is to reduce the resistance to impacting fasteners, so that the locking element remains reliably in its locking position and uncontrolled ejection of the fasteners is effectively prevented. At the same time, the coating reduces mechanical wear of the abutment surface.

Furthermore, the invention refers to a feeding unit for transporting fasteners from a first element to a second element, comprising a coupling device as described having a first and a second end, an outlet of a supply tube connected to the first end of the coupling device, which supply tube can be connected by its inlet to the first element, and a receiving element which is detachably connected to the second end of the coupling device and is designed to receive the fasteners and to transfer the fasteners elements to the second element, wherein, when the receiving element is connected to the coupling device, the locking element of the coupling device is moved from its locking position to its open position so that the feed channel of the coupling device is free for the feeding of fasteners.

The feeding unit is designed to transport fasteners from a first element to a second element and comprises a coupling device having a first and a second end. The outlet of a supply tube is connected to the first end of the coupling device, wherein the inlet of the supply tube can be connected to the first element, for example a magazine or other storage container for fasteners. The second end of the coupling device is detachably connected to a receiving element that is used to transfer the fasteners to a processing machine, such as a setting device (for instance the fasteners are transferred to a receiver of a setting device or first to a diverter).

When the receiving element is connected to the second end of the coupling device, the locking element of the coupling device is moved from its locked position to the open position. In the open position, the feed channel of the coupling device is released so that the fasteners can be transported unhindered from the supply tube via the coupling device to the receiving element and finally to the processing machine. This arrangement ensures that the fasteners are fed safely and in a controlled manner, while the locking element prevents the uncontrolled ejection of the fasteners when it is disengaged.

It is preferred that the supply tube be designed as a pressurizable tube that transports the fasteners using compressed air. The supply tube can be designed, for example, as a plastic or metal tube or a combination thereof. It is advantageous if the supply tube can be connected to a controllable compressed air source. Pressurization ensures reliable and consistent transport of the fasteners from the first element, for example a magazine, through the coupling device to the receiving element. The use of compressed air enables a high feed rate and ensures that the fasteners are accurately and efficiently transported through the supply tube without the need for mechanical conveying means.

To establish a quick and secure connection with the coupling device, it may be advantageous for the receiving element to include a connection end that is specifically designed to connect to the second end of the coupling device. This connection end allows the receiving element to be securely and detachably attached to the coupling device, ensuring that the fasteners are firmly transferred from the feed channel of the coupling device to the receiving element.

One embodiment of the feeding unit is designed so that the connection end of the receiving element is sleeve-shaped and comprises at least one active surface. This active surface is arranged in such a way that, when the second end of the coupling device is received in the connection end, it comes into operative contact with the second lever arm of the locking element of the coupling device. When the second lever arm comes into contact with the active surface, it is moved against the spring force of the elastic element, causing the locking element to move from its locking position to the open position. In the open position, the feed channel of the coupling device is released so that the fasteners can be transported unhindered by the feeding unit.

It is preferred that the connection end of the receiving element comprises means for establishing a quick-release connection that form a quick-release connection with corresponding means on the second end of the coupling device. The quick-release connection enables a reliable and time-saving connection and disconnection between the receiving element and the coupling device. The means of the quick-release fastener can be designed, for example, as latching mechanisms, snap-on connections, bayonet locks or threaded couplings. In this way, the means of the connection end of the receiving element securely engage with the corresponding counterparts at the second end of the coupling device and ensure a form-fitting and/or force-fitting connection.

The quick-release fastener is designed so that it can be operated without tools or with tools and minimal effort. At the same time, the quick-release fastener advantageously ensures that the receiving element is firmly and securely attached to the coupling device so that the fasteners are firmly transferred. In addition, the quick-release fastener prevents the components from being unintentionally disconnected during operation.

The invention will be described in more detail below, with reference to an example of the invention shown in the drawing. It shows
- Figure 1: a schematic representation of a first element, a feeding unit and a second element,
- Figure 2: a sectional view of part of a coupling device with a removed receiving element and
- Figure 3: a sectional view of part of a coupling device with a connected receiving element.

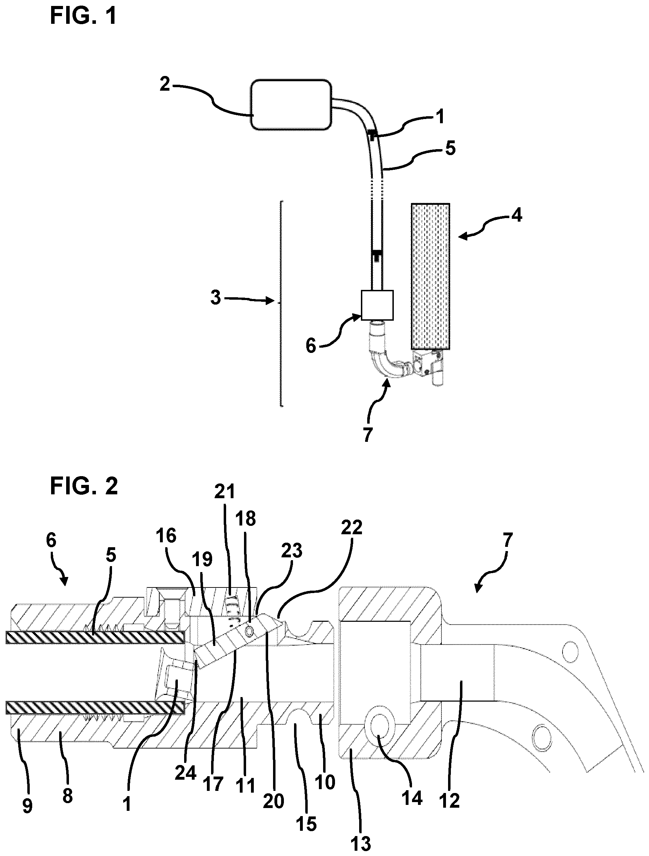

Figure 1 schematically shows a system for attaching fasteners 1, such as studs or rivets. The system includes a first element 2, a feeding unit 3, and a second element 4.

The first element 2 is a mechanical structural component that can, for example, receive a large number of fasteners 1 before they are individually transferred to the feeding unit 3. The first element 2 can be a magazine, a funnel or a similar device. The second element 4 is, in particular, a processing device that processes the fasteners 1. This can be, for example, a setting device for rivets or a welding device for weld studs.

The feeding unit 3 connected to the first element 2 comprises, in the embodiment shown, a supply tube 5 connected to the first element 2 and via a coupling device 6 to a receiving element 7. The receiving element 7 is in turn connected to the second element 4, in particular the processing machine. The supply tube 5 has an inlet that can be connected directly or indirectly to the first element 2 and an outlet that leads to the receiving element 7, especially via the coupling device 6. The supply tube 5 is designed to transport fasteners 1, in particular isolated fasteners 1, from the magazine to the second element 4 or receiving element 7. This transport is carried out, for example, by means of compressed air. Alternatively, the transport can also be carried out by gravity, a pusher or other means. The coupling device 6 serves as a coupling between the outlet of the supply tube 5 and the receiving element 7. The connection between the outlet of the supply tube 5 and the coupling device 6 can be made by an interference fit or a snap-on connection. However, other connection methods, such as gluing or welding, are also possible.

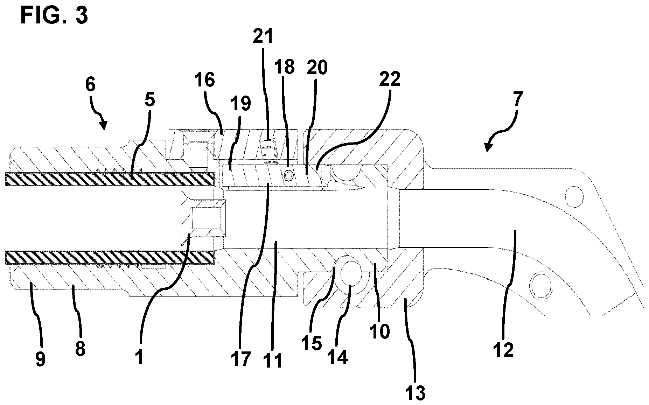

The coupling device 6 is shown in detail in figures 2 and 3. The coupling device 6 comprises a coupling body 8 that comprises a first and a second end 9, 10. The two ends 9, 10 are connected via a feed channel 11 that passes through the coupling body in its longitudinal direction. The feed channel 11 can be designed in the form of a hollow cylinder and is used to guide fastening means 1. Depending on the embodiment of the feeding unit 3, the coupling device 6 or the coupling body 8 can comprise various geometric shapes. For example, it can be designed in an L-shaped manner or can be straight.

The supply tube 5 leads to the first end 9 of the coupling device 6. There may be constrictions or shoulders in the feed channel 11, more precisely on its circumferential surface, which serve as an axial stop for the supply tube 5. The receiving element 7 is connected to the second end 10 of the coupling device 6, so that the feed channel 11 of the coupling device 6 leads to a channel 12 of the receiving element 7. The receiving element 7 comprises a sleeve-shaped or collar-shaped connection end 13, which is designed to receive the second end 10 of the coupling device 6. A quick-release fastener can be used to establish a secure and quick connection between the coupling device 6 and the receiving element 7. The quick-release fastener can comprise engaging elements 14 such as balls or shafts or others mounted in the connection end 13, which engage in corresponding notches or grooves 15 in the second end 10 of the coupling device 6. Of course, other connections between the receiving element 7 and the coupling device 6 are also possible, such as snap-in or latching connections.

The coupling body 8 includes a cover 16 that can be reversibly connected to the coupling body 8 and covers a recess in the coupling body 8. The feed channel 11 is accessible via the recess, which may be designed as a slot, for example. In the example shown, the cover 16 can be attached to the coupling body 8 using screw connections. The cover 16 allows access to the feed channel 11 for maintenance, for example. The coupling body 8 also includes a locking element 17 that is mounted on a bearing element 18 so that it can pivot about a pivot axis. The bearing element 18 can be fixed in the coupling body 8, in particular in the recess in the cover 16. If the bearing element 18 and thus also the locking element 17 are mounted in the cover 16, the locking element 17 can be removed with the cover 16 from the coupling body 8 and serviced, for example. The bearing element 18 can be provided as a metal pin that is rotatably mounted in corresponding bearings.

The locking element 17 is designed as a rectangular plate-shaped element. The locking element 17 comprises a first and a second lever arm 19, 20, which extend from the bearing element 18 or the pivot axis to the free ends of the locking element 17. An elastic element 21 is arranged above the first lever arm 19 in a receptacle or recess in the cover 16, in such a way that one direction of action of the elastic element 21 points in the direction of the first lever arm. The elastic element 21 can be designed as a compression spring. A bevel 22 is provided on the second lever arm 20 of the locking element 17, the slope of which points towards the connection end 13 of the receiving element 7.

The locking element 17 can be in a locking position and an open position, wherein intermediate positions between the locking position and the open position naturally exist. The locking position is shown in Figure 2 and the open position in Figure 3 as examples. In the locking position, the first lever arm 19 extends at least partially into the feed channel 11, whereas in the open position, the locking element 17 is essentially aligned parallel to the longitudinal axis of the coupling device 6. In this case, the elastic element 21 exerts a compressive force on the first lever arm 19, so that the first lever arm is moved around the pivot axis, at least partially, into the feed channel 11. The elastic element 21 is aligned in such a way that it can exert the compressive force on the first lever arm 19. In particular, the compressive force on the first lever arm is greatest when the locking element 17 is in the open position, wherein the force is reduced when the locking element 17 is in the locking position.

In the locking position, at least the free end of the first lever arm 19 is located in the feed channel 11. The free end of the second lever arm 20 is moved in the opposite direction to the first lever arm 19 and is at least partially placed against a restricting element 23, which limits the pivoting movement of the locking element 17. The restricting element 23 can, for example, be designed as an edge in the cover 16. It may be advantageous for the restricting element 23 to comprise a coating to prevent the cover 16 from being damaged by the locking element 17 striking it. Depending on the embodiment, the restricting element 23 may alternatively also be part of the coupling body 8.

In order to design the effect of the force applied in a more controlled manner, it may be envisaged that the free end of the elastic element 21, which advantageously rests on the surface of the first lever arm 19, is fixed to the surface of the first lever arm 19. Furthermore, a bulge or the like can be provided in the first lever arm 19, in which the free end of the elastic element 21 is placed.

In the locking position, the connection end 13 of the receiving element 7 is not connected to the second end 10 of the coupling device 6. This means that a supply of fasteners 1 to the receiving element 7 should not occur in an optimal manner. If, nevertheless, fasteners 1 reach the feed channel 11 of the coupling device 6 via the supply tube 5, they push against the first lever arm 19 of the locking element 17, which extends into the feed channel 11. Because the free end of the first lever arm 19 extends in the feed direction, the fastener 1 abutting the lever arm 19 exerts a moment on the first lever arm 19, which pushes the first lever arm 19 even more strongly in the direction of the feed channel 11. In particular, the free end of the first lever arm 19 is designed to comprise an abutment surface 24. It is preferred that the abutment surface 24 protrudes at least partially and in particular completely into the feed channel 11. In an embodiment, the abutment surface 24 extends essentially perpendicular to a longitudinal axis of the locking element 17. The abutment surface 24 can also be at an angle to the longitudinal axis of the locking element 17. The abutment surface 24 may comprise a friction-reducing coating that reduces the resistance to impacting fasteners 1. It may be provided that there is a cross-sectional constriction in the feed channel 11, whereby the area of the feed channel 11 into which the first lever arm 19 of the locking element 17 extends comprises a small cross-section. As a result, the first lever arm 19 can be designed to be shorter in order to close the feed channel 11 for the most part.

If, as indicated in Figure 3, the connection end 13 of the receiving element 7 is put over the second end 10 of the coupling device 6, the connection end 13 slides with an effective surface in the direction of the second lever arm 20 of the locking element 17, or more precisely its bevel 22 at the free end. When moving in the direction of the coupling device 6, the active surface of the connection end 13 comes into contact with the bevel 22, slides over it and exerts a force on the second lever arm 20, so that the first lever arm 19 is moved out of the feed channel 11 about the pivot axis and against the spring force of the elastic element 21. The locking element 17 moves to the open position, in which the locking element 17, or more precisely the first and second lever arms 19, 20, are essentially parallel to the longitudinal axis of the coupling device 6. In the open position, the feed channel 11 is not blocked by the first lever arm 19 and fasteners 1 can be conveyed through it.

The coupling device 6 according to the invention can be used to easily prevent unwanted ejection of fasteners 1 from the feed channel 11 in a non-connected state with the receiving element 7.

## Claims

1. Coupling device (6) for connection to a feeding unit (3) designed to transport fasteners (1) from a first element (2) to a second element (4), comprising:
- a coupling body (8) with a feed channel (11) that passes through the coupling body (8) in its longitudinal direction and extends between a first end (9) and a second end (10) of the coupling body (8),
- a locking element (17) that is mounted in the coupling device (6) with a bearing element (18) so as to be rotatable about a pivot axis, wherein said locking element (17) is movable between a locking position and an open position,
- an elastic element (21) that biases the locking element (17) into the locking position, wherein,
the locking element (17) comprises a first and a second lever arm (19, 20) which each extend from the pivot axis to free ends of the locking element (17), wherein the first lever arm (19) comprises an abutment surface (24) at its free end and wherein the elastic element (21) is in operative contact with the first lever arm (19) of the locking element (17), so that the abutment surface (24) of the first lever arm (19) projects into the feed channel (11).

2. Coupling device (6) according to claim 1, **characterized in that** the elastic element (21) is designed as a compression spring which is arranged between the first lever arm (19) of the locking element (17) and a fixed support on the coupling device (6).

3. Coupling device (6) according to one of the preceding claims, **characterized in that** the feed channel (11) of the coupling body (8) comprises a cross-sectional constriction into which the locking element (17) projects with the first lever arm (19).

4. Coupling device (6) according to one of the preceding claims, **characterized in that** the second lever arm (20) comprises a bevel (22) at its free end.

5. Coupling device (6) according to one of the preceding claims, **characterized in that** the coupling device (6) comprises a restricting element (23) which forms a stop for the second lever arm (20) of the locking element (17) in the locking position of the locking element (17) and thus defines a maximum pivoting angle of the locking element (17).

6. Coupling device (6) according to one of the preceding claims, **characterized in that** the coupling device (6) comprises a removable cover (16).

7. Coupling device (6) according to claim 6, **characterized in that** the cover (16) comprises a recess pointing in the direction of the feed channel (11) and accommodating the elastic element (21).

8. Coupling device (6) according to claim 6, **characterized in that** a section of the cover (16) forms the restricting element (23).

9. Coupling device (6) according to one of the preceding claims, **characterized in that** the pivot axis of the locking element (17) is defined by a pin which is mounted in the coupling body (8) or the cover (16).

10. Coupling device (6) according to one of the preceding claims, **characterized in that** the abutment surface (24) extends transversely to the longitudinal axis of the locking element (17).

11. Coupling device (6) according to claim 10, **characterized in that** the abutment surface (24) comprises a friction-reducing coating.

12. Feeding unit (3) for transporting fasteners (1) from a first element (2) to a second element (4), comprising a coupling device (6) according to one of the preceding claims having a first and a second end (9, 10), an outlet of a supply tube (5) connected to the first end (9) of the coupling device (6), which supply tube (5) can be connected by its inlet to the first element (2), and a receiving element (7) which is detachably connected to the second end (10) of the coupling device (6) and is designed to receive the fasteners (1) and to transfer the fasteners elements (1) to the second element (4), wherein, when the receiving element (7) is connected to the coupling device (6), the locking element (17) of the coupling device (6) is moved from its locking position to its open position so that the feed channel (11) of the coupling device (6) is free for the feeding of fasteners (1).

13. Feeding unit (3) according to claim 12, **characterized in that** the supply tube (5) is designed as a pressurizable tube which transports the fasteners (1) by means of compressed air.

14. Feeding unit (3) according to claim 12 or 13, **characterized in that** the receiving element (7) comprises a connection end (13) designed for connection to the second end (10) of the coupling device (6).

15. Feeding unit (3) according to claim 14, **characterized in that** the connection end (13) is designed in the form of a sleeve and comprises at least one active surface which, after the second end (10) of the coupling device (6) has been received in the connection end (13), comes into operative contact with the second lever arm (20) of the coupling device (6) and moves the second lever arm (20) against the spring force of the elastic element (21) into the open position.
